# EUROPÄISCHE PATENTANMELDUNG

(11) **EP 1 541 797 A1**
(43) Veröffentlichungstag der Anmeldung: **15.06.2005**
(21) Anmeldenummer: 03028316.2
(22) Anmeldetag: 09.12.2003
(51) Int. Cl.: E06B 9/28, E06B 9/386, F24J 2/24

(54) **Sonnenlamelle sowie Sonnenstore und Verfahren zu ihrem Betrieb**

(71) Anmelder: FENSTERFABRIK ALBISRIEDEN AG, CH-8047 Zürich (CH)
(72) Erfinder: Buchner, Andreas, 44795 Bochum (DE); Mahler, Manfred, 42899 Remscheid (DE); Blumer, Hermann, 9104 Waldstatt (CH)
(74) Vertreter: Wagner, Wolfgang Heribert

(57) **Zusammenfassung**

Eine plattenförmige Solarlamelle weist eine sich über eine Deckwand (2) erstreckende schwarz lackierte Absorptionsfläche (10) auf und ist über ihre ganze Länge mit einem Speichermaterial (12) gefüllt, welches bei einer Uebergangstemperatur von z.B. 21°C einem Phasenübergang unterworfen ist und daher ohne Temperaturänderung Wärme aufnimmt oder abgibt. Der Absorptionsfläche (10) ist eine transparente Vorschale (13) vorgeordnet, die einen isolierenden, durch eine Sperrleiste (16) bei senkrechter Position unten abgeschlossenen, sonst offenen Luftspalt (15) begrenzt. Auf der der Absorptionssfläche (10) gegenüberliegenden Seite ist eine z.B. weiss lackierte Reflexionsfläche (11) angeordnet. Gemeinsam drehbare Sonnenlamellen einer vor einem Fenster angeordneten Sonnenstore werden im Winter tagsüber mit den Absorptionsflächen (10) ungefähr gegen die Sonnenstrahlung gestellt, wobei das Speichermaterial (12) unter Phasenübergang Wärme aufnimmt und während der Nacht senkrecht, während das Speichermaterial (12) unter umgekehrtem Phasenübergang Wärme hauptsächlich gegen das Fenster abgibt. Im Sommer werden die Reflexionsflächen (11) ungefähr gegen die Sonne gestellt.

## Beschreibung

### Technisches Gebiet

Die Erfindung betrifft eine Sonnenlamelle sowie eine aus erfindungsgemässen Sonnenlamellen aufgebaute Sonnenstore und Verfahren zu ihrem Betrieb. Sonnenstoren werden an Gebäudeaussenseiten angebracht und zum Verschatten von der Sonnenstrahlung ausgesetzten Fenstern eingesetzt.

### Stand der Technik

Sonnenstoren verschiedener Bauart sind seit langem bekannt. Ihre Funktion beschränkt sich auf das Verschatten von Fenstern zur Verdunkelung des dahinterliegenden Raumes. Meist soll dadurch auch oder vor allem eine Aufheizung des Raumes durch direkte Sonneneinstrahlung verhindert werden.

### Darstellung der Erfindung

Der Erfindung liegt die Aufgabe zu Grunde, eine Sonnenlamelle und eine aus erfindungsgemässen Sonnenlamellen aufgebaute Sonnenstore anzugeben, welche ausserdem einen Beitrag zum Wärmehaushalt des dahinterliegenden Raumes liefert, indem sie tagsüber eingestrahlte Wärme speichert und sie nachts wieder abgibt.

Nach einer besonderen Weiterbildung der erfindungsgemässen Sonnenlamelle ist die daraus aufgebaute Sonnenstore auch geeignet, bei hoher Sonneneinstrahlung eine zu starke Aufheizung zu verhindern, gleichzeitig aber ausreichende Lichteinstrahlung in den Raum zu gewährleisten.

Schliesslich soll die Erfindung Verfahren zum Betrieb der erfindungsgemässen Sonnenstoren angeben, bei welchen ihre günstigen Eigenschaften möglichst gut genutzt werden.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen Querschnitt durch eine erfindungsgemässe Sonnenlamelle,
- Fig. 2: schematisch eine Seitenansicht einer erfindungsgemässen Sonnenstore,
- Fig. 3a: einen Absorptionswinkel als Funktion der Tageszeit der Sonnenlamellen einer erfindungsgmässen Sonnenstore bei Betrieb derselben nach einem ersten erfindungsgemässen Verfahren,
- Fig. 3b: die spezifische Energieeinstrahlung als Funktion der Tageszeit bei Betrieb der erfindungsgemässen Sonnenstore gemäss dem ersten erfindungsgemässen Verfahren und
- Fig. 4: einen Reflexionswinkel als Funktion des Sonnenstandes der Sonnenlamellen einer erfindungsgmässen Sonnenstore bei Betrieb derselben nach einem zweiten erfindungsgemässen Verfahren.

### Wege zur Ausführung der Erfindung

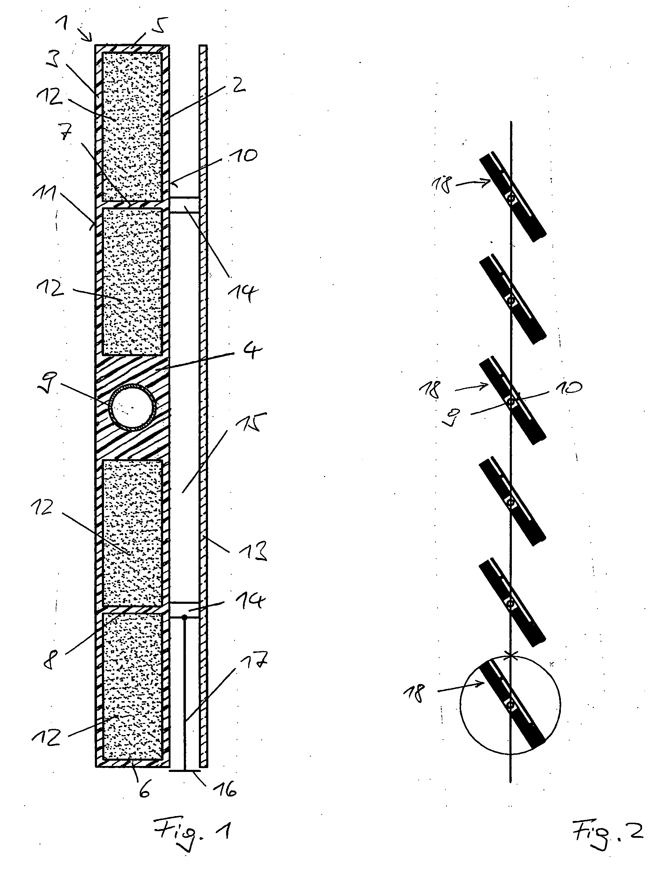

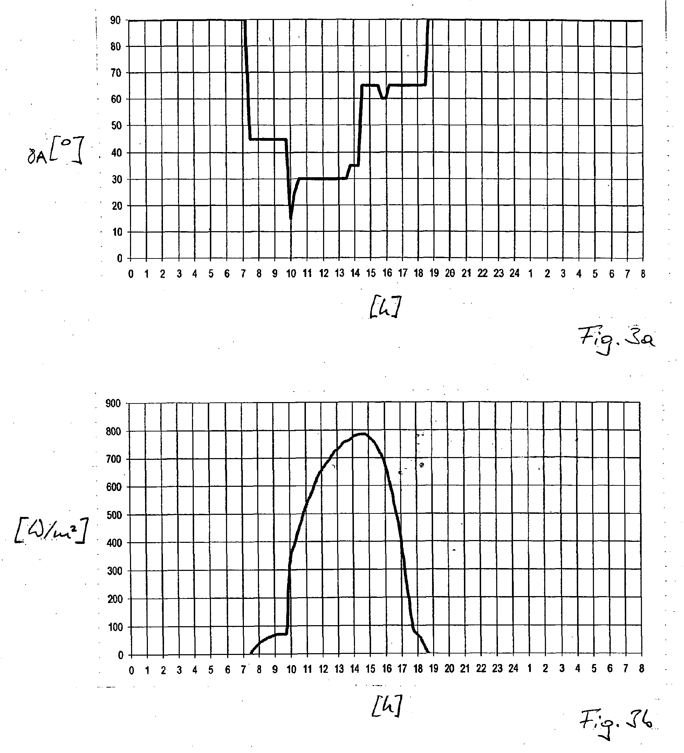

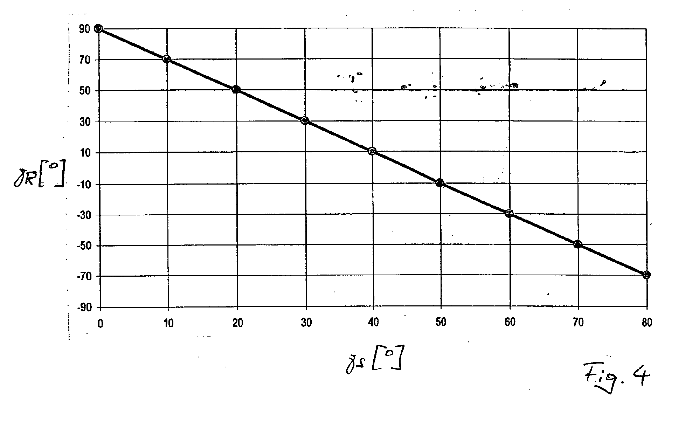

Die erfindungsgemässe Sonnenlamelle ist (Fig. 1) als ebene rechteckige Platte ausgebildet, welche z.B. zwischen 60cm bis 100cm lang, zwischen 10cm und 40cm breit und zwischen 1cm und 5cm dick sein kann. Sie umfasst ein Gehäuse 1 mit zwei parallelen Deckwänden 2, 3, welche durch einen sich über die ganze Länge der Sonnenlamelle erstreckenden mittigen Balken 4 verbunden sind sowie durch die Deckwände 2, 3 an ihren Längsrändern verbindende Seitenwände 5, 6 und zu diesen parallele Zwischenwände 7, 8, ausserdem durch nicht dargestellte Stirnwände, welche an den Enden der Sonnenlamelle die Querränder der Deckwände 2, 3 verbinden. Durch das Zentrum des Balkens 4 läuft eine Längsbohrung, in welcher ein Führungsrohr 9 oder auch eine Führungsstange liegt, welche an beiden Enden übersteht und an der das Gehäuse 1 unverdrehbar aufgehängt ist. Das Gehäuse 1 kann z.B. aus Metall, Kunststoff, Holzkunststoff oder anderem aus Holz gewonnenen Material bestehen. Günstig ist eine hohe Wärmeleitfähigkeit.

Die Aussenseite der Deckwand 2 bildet eine Absorptionsfläche 10, welche eine hohe Absorptivität für Sonnenstrahlung aufweist, also unter Sonneneinstrahlung viel Energie aufnimmt. Sie ist z.B. dunkel, vorzugsweise schwarz lackiert. Die entgegengesetzte Aussenseite der anderen Deckwand 3 ist dagegen als Reflexionsfläche 11 ausgebildet, die eine möglichst hohe Reflexivität und eine entsprechend geringe Absorptivität für Sonnenstrahlung - vorzugsweise höchstens 15% der Absorptivität der Absorptionsfläche 10 - aufweist. Dazu ist sie z.B. weiss lackiert, mit einer matt reflektierenden Folie überzogen oder auch von Solarzellen bedeckt.

Zwischen den Deckwänden 2, 3 sowie dem Balken 4 und den Zwischenwänden 7, 8 sowie den letzteren und den Seitenwänden 5, 6 liegen vollständig umschlossene Hohlräume, welche sich über die ganze Länge der Sonnenlamelle erstrecken und jeweils mit einem Speichermaterial 12 gefüllt sind. Das Speichermaterial 12 ist einem Phasenübergang bei einer zwischen 0°C und 40°C, vorzugsweise zwischen 18°C und 26°C liegenden Uebergangstemperatur untwerworfen, wobei die Uebergangsenthalpie mindestens 30Wh/kg beträgt. Es kann sich etwa um einen Phasenübergang fest/flüssig handeln. So kann z.B. ein Paraffin RT 20 der Rubitherm GmbH, Worthdamm 13-27, D-20457 Hamburg verwendet werden, das eine Uebergangstemperatur von 21°C und eine Uebergangsenthalpie von 39,08Wh/kg aufweist. Das Speichermaterial 12 ist thermisch eng an die Absorptionsfläche 10 gekoppelt.

Der Absorptionsfläche 10 ist mit geringem Abstand eine Vorschale 13 aus transparentem Material - Glas oder einem geeigneten Kunststoff wie Polycarbonat - parallel in einem Abstand von z.B. ca. 5mm vorgelagert, welche von Haltern 14 festgehalten wird. Zwischen der Vorschale 13 und der Absorptionsfläche 10 liegt daher ein Luftspalt 15. An seinem unteren Ende ist eine Sperre angebracht, die von einer knapp unterhalb der Stirnwand 6 liegende durchgehende Sperrleiste 16 gebildet wird, welche über Drähte 17 an den Haltern 14 pendelnd aufgehängt ist. Ist die Absorptionsfläche 10 genau senkrecht ausgerichtet, so liegt die Sperrleiste 16 genau vor dem unteren Ende des Luftspalts 15, so dass er nahezu luftdicht verschlossen ist. Bei hinreichend geneigter Absorptionsfläche 10 ist die Sperrleiste 16 dagegen dem Gehäuse 1 gegenüber ausgelenkt, so dass sie den Luftspalt 15 nur teilweise verdeckt und gewöhnlich ein Luftstrom durch denselben fliesst, der die Bildung von Kondenswasser dort verhindert.

Eine erfindungsgemässe Sonnenstore weist (Fig. 2) mehrere erfindungsgemässe Sonnenlamellen 18 auf, die derart übereinander angeordnet sind, dass sie, wenn sie genau senkrecht stehen, mit sehr geringem Abstand aufeinanderfolgen und eine nahezu lückenlose Wand bilden. Die überstehenden Enden der Rohre 9 sind jeweils so drehbar gelagert und antreibbar, dass die Sonnenlamellen 18 gemeinsam um 360° gedreht werden können. Der Antrieb kann z.B. vertikal durchgehende verschiebbare Zahnstangen oder die Sonnenlamellen 18 paarweise verbindende Zahnriemen umfassen, die mit an den Führungsrohren 9 angebrachten Zahnrädern eingreifen.

Die erfindungsgemässe Sonnenstore ist gewöhnlich vor einem Fenster angebracht, wobei der Abstand möglichst klein ist, derart, dass eine Rotation der Sonnenlamellen 18 gerade noch möglich ist. Der Abstand kann auch verstellbar sein, so dass er nach der Ausrichtung der Sonnenlamellen 18 so gewählt werden kann, dass diese das Fenster gerade nicht berühren und insbesondere bei senkrechter Ausrichtung der Sonnenlamellen 18 die Sonnenstore dicht vor dem Fenster liegt. Die Sonnenstore kann natürlich auch so befestigt sein, dass sie vom Fenster wegschiebbar oder -klappbar ist. Es ist auch möglich, die Sonnenstore vor einer Fassade anzubringen.

Die erfindungsgemässe Sonnenstore kann vor allem an kalten, aber sonnigen Tagen, wie sie insbesondere im Winter häufig vorkommen, eine beträchtliche Energieeinsparung bewirken. Vorzugsweise wird sie dazu so betrieben, dass sowohl eine grosse Wärmeabsorption vor allem durch die Absorptionsflächen 10 erzielt wird. Dazu wird der im folgenden als Absorptionswinkel γ_{A} bezeichnete Winkel zwischen den Absorptionsflächen 10 und der Horizontalen abhängig von der Tageszeit h programmgesteuert eingestellt.

In Fig. 3a ist eine derartige Abhängigkeit für eine an einer Südwestfasse angebrachte Sonnenstore an einem bestimmten Wintertag in Wil, Schweiz dargestellt. Etwa um 7 Uhr morgens, bei Sonnenaufgang, beträgt der Absorptionswinkel γ_{A} 90°, d.h. die Sonnenlamellen stehen senkrecht, die Absorptionsflächen 10 weisen nach aussen. Anschliessend wird er ziemlich rasch auf ca. 45° gesenkt, so dass die Absorptionsflächen 10 schräg nach oben weisen. Der Absorptionswinkel γ_{A} ist dabei auf eine optimale Ausnutzung diffuser Strahlung eingestellt, da die Sonnenstore noch im Schatten liegt. Nach einem um etwa 10 Uhr, wenn die Fassade erstmals unter direkter Sonneneinstrahlung liegt, erreichten Minimum von 15° wird der Absorptionswinkel γ_{A} auf etwa 30° angehoben und dieser Wert über die Mittagszeit beibehalten. Etwa in der Mitte des Nachmittags steigt der Absorptionswinkel γ_{A} auf ca. 65° und bleibt im Grossen und Ganzen konstant, bis er etwa bei Sonnenuntergang wieder auf 90° angehoben wird. In dieser Position, in der die Sonnenstore das Fenster praktisch vollständig verdeckt, bleiben die Sonnenlamellen 18 bis zum Morgen.

Die spezifische Energieeinstrahlung folgt (Fig. 3b) einer Kurve, welche am frühen Nachmittag ein Maximum erreicht. Bei der Steuerung des Absorptionswinkels γ_{A} werden vorzugsweise die Ausrichtung des Fensters und die Witterung, insbesondere das Vorliegen direkter Sonneneinstrahlung oder lediglich diffuser Strahlung, berücksichtigt sowie die Bedürfnisse des Benutzers hinsichtlich Licht und Energieeinsparung. Dabei wird auch der Eigenverschattung der Sonnenstore, d.h. der gegenseitigen Beschattung der Sonnenlamellen 18 Rechnung getragen.

Am Morgen entspricht die Temperatur der Sonnenlamellen 18, insbesondere des Speichermaterials 12, gewöhnlich etwa derjenigen der Aussenluft, d.h. sie liegt im Winter gewöhnlich unter 0°C und jedenfalls unterhalb der Uebergangstemperatur von im Beispiel 21°C. Das Speichermaterial 12 ist in einem Aggregatzustand I (fest). Durch Sonneneinstrahlung, die von der Absorptionsfläche 10 absorbiert wird, steigt die Temperatur des Speichermaterials 12 allmählich auf die Uebergangstemperatur. Dort bleibt sie im wesentlichen stehen, während das Speichermaterial 12 eine Phasenumwandlung durchmacht, bei dem es in einen Aggregatzustand II (flüssig) übergeht. Dabei nimmt es eine verhältnismässig grosse, von der spezifischen Uebergangsenthalpie und der Gesamtmasse des Speichermaterials abhängige Wärmemenge auf. Sobald das Speichermaterial vollständig im Aggregatzustand II ist, steigt die Temperatur der Sonnenlamellen 18 und damit des Speichermaterials 12 wieder, bis sie etwa Mitte Nachmittag ein Maximum erreicht und dann wegen des Nachlassens der Sonneneinstrahlung und des Rückgangs der Aussenlufttemperatur wieder zurückgeht.

Sobald die Temperatur auf die Uebergangstemperatur gesunken ist, was gewöhnlich nach Sonnenuntergang, während des Abends eintritt, gibt die Sonnenstore, während das Speichermaterial 12 einen Phasenübergang vom Aggregatzustand II zum Aggregatzustand I durchmacht, allmählich die gesamte dort gespeicherte Uebergangsenthalpie als Wärme ab, während die Temperatur bei der Uebergangstemperatur stehen bleibt. Da die Sonnenlamellen 18 dann senkrecht stehen, mit den Asborptionsflächen 10 nach aussen, ist jeweils der Luftspalt 15 durch die Sperrleiste 16 nahezu luftdicht verschlossen, so dass dort ein isolierendes Luftpolster bestehen bleibt, das die Wärmeabgabe nach aussen dämpft. Die Sonnenstore bleibt daher sehr lange auf der Uebergangstemperatur von 21°C, so dass der Raum kaum Wärme durch das Fenster verliert, insbesondere sobald die Raumtemperatur etwas tiefer liegt. Dadurch wird der Heizbedarf während der Nacht beträchtlich reduziert. Spätestens gegen Morgen ist der Phasenübergang gewöhnlich abgeschlossen und die Temperatur der Sonnenlamellen sinkt allmählich etwa auf die Temperatur der Aussenluft ab.

An einem sonnigen Sommertag ist der Phasenübergang des Speichermaterials 12 nicht von grosser Bedeutung. Unter diesen Bedingungen geht es vor allem darum, direkte Sonneneinstrahlung durch das Fenster in den Raum möglichst weitgehend zu unterbinden, um die Aufheizung desselben in Grenzen zu halten und zugleich eine ausreichende Beleuchtung des Raumes durch indirekten Lichteinfall zu gewährleisten. Während der Nacht und bei Sonnenaufgang stehen die Sonnenlamellen 18 wiederum senkrecht, doch weisen die Reflexionsflächen 11 nach aussen. Der im folgenden (s. Fig. 4) als Reflexionswinkel γ_{R} bezeichnete Winkel zwischen den Reflexionsflächen 11 und der Horizontalen beträgt also 90°.

Ab Sonnenaufgang folgt der Reflexionswinkel γ_{R} im wesentlichen einer linear abnehmenden Funktion des Sonnenhöhenwinkels γ_{S}. Dabei kann der Reflexionswinkel γ_{R} verhältnismässig grosse negative Werte von -30° und darunter erreichen, z.B. -70° wie in Fig. 4 dargestellt, so dass die Reflexionsflächen 12 schräg nach oben gegen das Fenster weisen. Wegen deren hoher Reflexivität wird verhältnismässig viel Sonnenlicht über die Reflexionsflächen 11 in den Raum geleitet. Dabei bleibt jedoch das Fenster weitgehend verschattet, wird also kaum direkter Sonneneinstrahlung ausgesetzt, so dass sich die Erwärmung des Raumes in Grenzen hält.

Es sind natürlich verschiedene Abwandlungen der erfindungsgemässen Sonnenlamelle vom beschriebenen Beispiel möglich. So kann sie z.B. leicht gekrümmt oder auch leicht konvex, z.B. von flach elliptischem Querschnitt sein.

### Bezugszeichenliste

- 1: Gehäuse
- 2, 3: Deckwand
- 4: Balken
- 5, 6: Seitenwand
- 7, 8: Zwischenwand
- 9: Führungsrohr
- 10: Absorptionsfläche
- 11: Reflexionsfläche
- 12: Speichermaterial
- 13: Vorschale
- 14: Halter
- 15: Luftspalt
- 16: Sperrleiste
- 17: Draht
- 18: Sonnenlamelle

## Patentansprüche

1. Sonnenlamelle, **dadurch gekennzeichnet, dass** sie eine Absorptionsfläche (10) mit hoher Absorptivität für Sonnenstrahlung aufweist und Speichermaterial (12) umfasst, welches in einem Uebergangstemperaturbereich einem Phasenübergang unterworfen ist, bei welchem es bei im wesentlichen gleichbleibender Temperatur gemäss seiner Uebergangsenthalpie Energie aufnimmt oder abgibt.

2. Sonnenlamelle nach Anspruch 1, **dadurch gekennzeichnet, dass** sie ein plattenförmiges Gehäuse (1) umfasst, das mindestens einen vollständig von Wänden umschlossenen Hohlraum aufweist, in welchem das Speichermaterial (12) angeordnet ist.

3. Sonnenlamelle nach Anspruch 2, **dadurch gekennzeichnet, dass** das Gehäuse (1) zwei voneinander beabstandete im wesentlichen parallele Deckwände (2, 3), wobei die Aussenseite einer derselben die Absorptionsfläche (10) bildet, aufweist und der zwischen ihnen liegende Zwischenraum im wesentlichen von dem mindestens einen Hohlraum eingenommen wird, welcher das Speichermaterial über die Länge des Gehäuses (1) verteilt enthält.

4. Sonnenlamelle nach Anspruch 3, **dadurch gekennzeichnet, dass** die Deckwände (2, 3) durch einen in Längsrichtung durchgehenden vorzugsweise etwa mittig angeordneten Balken (4) verbunden sind.

5. Sonnenlamelle nach Anspruch 4, **dadurch gekennzeichnet, dass** der Balken (4) eine in Längsrichtung durchgehende Bohrung zur Aufnahme eines Führungsrohrs (9) oder einer Führungsstange aufweist.

6. Sonnenlamelle nach einem der Ansprüche 1 bis 5, **dadurch gekennzeichnet, dass** sie eine Vorschale (13) aus lichtdurchlässigem Material aufweist, welche der Absorptionsfläche (10) mit Abstand vorgelagert ist.

7. Sonnenlamelle nach Anspruch 6, **dadurch gekennzeichnet, dass** sie eine Sperre aufweist, durch welche der Zwischenraum zwischen der Vorschale (13) und der Absorptionsfläche (10) längs eines in Längsrichtung durchgehenden Randes annähernd luftdicht verschliessbar ist.

8. Sonnenlamelle nach Anspruch 7, **dadurch gekennzeichnet, dass** die Sperre bei senkrechter Lage der Absorptionsfläche (10) wirksam ist und bei ausreichender Abweichung von der besagten Lage nicht.

9. Sonnenlamelle nach einem der Ansprüche 1 bis 8, **dadurch gekennzeichnet, dass** das Gehäuse (1) im wesentlichen aus Metall, Kunststoff oder einem im wesentlichen aus Holz hergestellten Material wie Holzkunststoff besteht.

10. Sonnenlamelle nach einem der Ansprüche 1 bis 9, **dadurch gekennzeichnet, dass** die Uebergangstemperatur des Speichermaterials (12) zwischen 0°C und 40°C, vorzugsweise zwischen 18°C und 26°C liegt.

11. Sonnenlamelle nach einem der Ansprüche 1 bis 10, **dadurch gekennzeichnet, dass** die Uebergangsenthalpie des Speichermaterials (12) mindestens 30Wh/kg beträgt.

12. Sonnenlamelle nach einem der Ansprüche 1 bis 11, **dadurch gekennzeichnet, dass** das Speichermaterial (12) einem Phasenübergang fest/flüssig unterworfen und vorzugsweise ein Paraffin ist.

13. Sonnenlamelle nach einem der Ansprüche 1 bis 12, **dadurch gekennzeichnet, dass** sie eine der der Absorptionsfläche (10) entgegengesetzte Reflexionsfläche (11) aufweist, welche eine hohe Reflexivität und eine entsprechend geringe Absorptivität für Sonnenstrahlung aufweist.

14. Sonnenlamelle nach Anspruch 13, **dadurch gekennzeichnet, dass** die Reflexionsfläche (11) mindestens zum Teil von Solarzellen gebildet wird.

15. Sonnenstore mit mehreren parallel übereinander angeordneten Sonnenlamellen (18) nach einem der Ansprüche 1 bis 14, welche um parallele waagrechte Achsen gemeinsam drehbar sind.

16. Verfahren zum Betrieb einer Sonnenstore nach Anspruch 15, **dadurch gekennzeichnet, dass** die Absorptionsflächen (10) gegen die Sonne weisen und ihr Absorptionswinkel (γ_{A}) gegenüber der Horizontalen nach einem Tageszyklus eingestellt wird, derart, dass er am Morgen ca. 90° beträgt, im Lauf des Tages erst gesenkt und später wieder angehoben wird, so dass er spätestens am Abend wiederum ca. 90° erreicht, und dann bis zum Morgen konstantgehalten wird.

17. Verfahren nach Anspruch 16, **dadurch gekennzeichnet, dass** der Absorptionswinkel (γ_{A}) im Lauf des Tages mindestens bis 40° gesenkt wird.

18. Verfahren zum Betrieb einer Sonnenstore nach Anspruch 15, mit Sonnenlamellen (18) nach Anspruch 13 oder 14, **dadurch gekennzeichnet, dass** die Reflexionsflächen (11) gegen die Sonne weisen und ihr Reflexionswinkel (γ_{R}) gegenüber der Horizontalen am Morgen ca. 90° beträgt und im wesentlichen eine abnehmende Funktion des Sonnenhöhenwinkels (γ_{S}) ist.

19. Verfahren nach Anspruch 18, **dadurch gekennzeichnet, dass** der Reflexionswinkel (γ_{R}) bei Sonnenhöchststand mindestens -30° erreicht.

20. Verfahren nach Anspruch 18 oder 19, **dadurch gekennzeichnet, dass** der Reflexionswinkel (γ_{R}) im wesentlichen linear vom Sonnenhöhenwinkel (γ_{S}) abhängt.
